# EUROPÄISCHE PATENTSCHRIFT

(11) **EP 4 186 720 B1**
(45) Veröffentlichungstag und Bekanntmachung des Hinweises auf die Patenterteilung: **17.12.2025**
(21) Anmeldenummer: 22194655.1
(22) Anmeldetag: 08.09.2022
(51) Int. Cl.: B60G 17/06

(54) **AKTIVE FAHRWERKSREGELUNG FÜR EIN KRAFTFAHRZEUG**
ACTIVE CHASSIS CONTROL FOR A MOTOR VEHICLE
COMMANDE ACTIVE DE SUSPENSION POUR VÉHICULE AUTOMOBILE

(30) Priorität: 26.11.2021 DE 102021131065
(43) Veröffentlichungstag der Anmeldung: 31.05.2023
(73) Patentinhaber: Audi AG, 85045 Ingolstadt (DE)
(72) Erfinder: Unger, Andreas, 85080 Gaimersheim (DE)

(56) Entgegenhaltungen:
- EP-B1- 3 006 238
- WO-A1-2010/028792
- WO-A1-2020/195113
- DE-A1- 102014 016 857
- DE-A1- 4 029 034
- DE-A1- 4 119 323
- DE-B4- 102007 025 118
- DE-B4- 102018 210 986
- JP-A- H0 858 338
- JP-A- H08 310 214
- US-A- 5 322 320
- US-A1- 2015 367 703
- US-A1- 2017 326 936
- US-A1- 2018 156 303
- US-A1- 2018 361 816
- US-A1- 2019 232 748
- US-A1- 2021 031 585

## Beschreibung

Die Erfindung betrifft eine aktive Fahrwerkregelung für ein Kraftfahrzeug nach dem Oberbegriff des Anspruches 1.

Allgemein sind aktive oder semiaktive Fahrwerksysteme bekannt, bei denen über krafteinleitende bzw. kraftbeeinflussende Elemente im Federungs- bzw. Dämpfungssystem aktive bzw. semiaktive Kräfte in der Radaufhängung erzeugt werden können. Dadurch ist es einerseits möglich, Unebenheiten der Straße, wie zum Beispiel Bodenwellen, auszugleichen und den Fahrzeugaufbau ruhig zu halten. Semiaktive Systeme sind als sogenannte Dämpferregelungen herstellerübergreifend in Serie. Die aktiven und semiaktiven Systeme werden allgemein als geregelte Fahrwerke bezeichnet.

Das Regelziel von geregelten Fahrwerken besteht darin, die Aufbauschwingung im Fahrbetrieb zu reduzieren, d.h. den Fahrzeugaufbau möglichst breitbandig zu beruhigen. Hierbei wird im Wesentlichen zwischen zwei Frequenzbereichen unterschieden, die für den Insassenkomfort von Relevanz sind, nämlich einem niederfrequenten Bereich von 0,5 Hz - 3 Hz, das heißt den Aufbaueigenfrequenzen (Aufbauschwingung), und einem hochfrequenten Bereich von 3 Hz - 20 Hz, das heißt der Isolationsbereich, Secondary Ride (Abrollkomfort).

Die Fahrwerkregelung zielt darauf ab, die Schwingungen im Bereich der Aufbaueigenfrequenzen zu minimieren, ohne den Abrollkomfort zu verschlechtern. Um dies zu erreichen, sind unterschiedliche Regelkonzepte bekannt, bei denen vom Aufbauregler Stellsignale berechnet werden, die auf den Fahrzeugaufbau wirken müssen, um die Regelziele zu erreichen.

Das subjektive Empfinden des Fahrzeuginsassen bei Vorliegen von Aufbauschwingungen und somit die Bedeutsamkeit, auftretende Aufbauschwingungen zu dämpfen, ist stark von der Fahrgeschwindigkeit abhängig. Dabei hat sich folgendes gezeigt: Im unteren Geschwindigkeitsbereich des Fahrzeugs wird die niederfrequente Aufbauschwingung (0,5 bis 1,3 Hz) vom Fahrzeuginsassen als unproblematisch empfunden, während hochfrequente Schwingungen im Bereich von 3 bis 20 Hz, das heißt Isolationsbereich, Secondary Ride, Abrollkomfort), die sich aus dem Abrollvorgang ergeben, das subjektive Empfinden des Fahrzeuginsassen beeinträchtigen. Umgekehrt gilt: Im hohen Geschwindigkeitsbereich des Fahrzeugs beeinträchtigt eine niederfrequente Aufbauschwingung (0,5 bis 1,3 Hz) das subjektive Empfinden des Fahrzeuginsassen, während hochfrequente Schwingungen (3 bis 20 Hz), die den Abrollkomfort reduzieren, vom Fahrzeuginsassen als unproblematisch empfunden werden.

Um dieser Anforderung gerecht zu werden, werden die im Aufbauregler generierten Stellsignale gemäß dem Stand der Technik mit einem fahrgeschwindigkeitsabhängigen Faktor multipliziert. Dieser Faktor ist bei geringen Geschwindigkeiten klein (zum Beispiel 0,5 bei weniger als 60 km/h) und bei hohen Fahrgeschwindigkeiten groß (zum Beispiel 1 bei mehr als 130 km/h).

Eine gattungsgemäße Fahrwerkregelung weist einen adaptiven Regelkreis zur Reduzierung von Aufbauschwingungen des Kraftfahrzeugs auf. In dem Regelkreis ist eine Regeleinheit eingebunden, die in Abhängigkeit von einer aktuellen Aufbauschwingung oder einem damit korrelierenden Parameter einen Fahrwerkaktuator ansteuert. Der Regeleinheit ist eine Adaptionseinheit nachgeschaltet, die ein von der Regeleinheit generiertes Stellsignal mit einem fahrgeschwindigkeitsabhängigen Skalierungsfaktor adaptiert, und zwar unter Bildung eines adaptierten Stellsignals, mit dem der Fahrwerkaktuator ansteuerbar ist. Der fahrgeschwindigkeitsabhängige Skalierungsfaktor ist in einer Signalerzeugungseinheit in Abhängigkeit von der aktuellen Fahrgeschwindigkeit bestimmbar. Dabei gilt: Mit größer werdendem Skalierungsfaktor erhöht sich die Dämpfungswirkung des Fahrwerkaktuators zur Dämpfung der Aufbauschwingung bei gleichzeitiger Reduzierung des Abrollkomforts. Umgekehrt gilt: Mit kleiner werdendem Skalierungsfaktor reduziert sich die Aufbauschwingungsdämpfungswirkung des Fahrwerkaktuators bei gleichzeitiger Steigerung des Abrollkomforts.

Werden die in der Regeleinheit generierten Stellsignale nur über der Fahrgeschwindigkeit skaliert bzw. adaptiert, entsteht insbesondere im unteren Geschwindigkeitsbereich (zum Beispiel bei Ortsdurchfahrten) ein Zielkonflikt zwischen den Aufbauschwingungen und dem Abrollkomfort. Um bei selten auftretenden größeren Anregungen den Aufbau noch ausreichend dämpfen zu können, muss im Stand der Technik der Skalierungsfaktor noch ausreichend groß bemessen sein, was jedoch den Abrollkomfort im unteren Geschwindigkeitsbereich beeinträchtigt. Eine weitere Reduzierung des Skalierungsfaktors würde zwar den Abrollkomfort nochmal deutlich erhöhen. Jedoch könnte bei selten auftretenden, größeren Anregungen der Aufbau nicht mehr ausreichend gedämpft werden.

Aus der DE 41 19 323 A1 ist ein Verfahren zur frequenzabhängigen adaptiven Regelung eines Fahrwerks und eine aktive Fahrwerksregelung gemäß dem Oberbegriff des Anspruchs 1 bekannt. Die DE 10 2018 210986 B4 offenbart ein Aufhängungssteuersystem. Aus der EP 3 006 238 B1 ist ein Aufhängungssystem für ein Fahrzeug bekannt. Die JP H08 310214 offenbart eine Aufhängungssteuerungsvorrichtung für Fahrzeuge. Aus der WO 2010/028792 A1 sind ein Verfahren und eine Vorrichtung zur Berechnung einer Dämpfersollkraft für ein einstellbares Dämpferelement bekannt. Die US 2015/367703 A1 offenbart ein Dämpfersteuersystem. Aus der US 2017/326936 A1 ist ein Dämpferkraft-Steuersystem für Fahrzeuge bekannt. Die DE 10 2007 025118 B4 offenbart eine Steuervorrichtung für einen Dämpfer mit variabler Dämpfungskraft. Aus der JP H08 58338 A ist eine Vorrichtung zur Steuerung der Dämpfungskraft eines Fahrzeugs bekannt. Die US 5 322 320 A offenbart ein Stoßdämpfer-Kraftregelsystem für Fahrzeuge. Aus der DE 40 29 034 A1 ist eine Einrichtung zur Beeinflussung des Federungsverhaltens einer gefederten Masse bekannt. Die US 2018/361816 A1 offenbart eine elektromagnetische Aufhängevorrichtung. Aus der WO 2020/195113 A1 ist ein Radaufhängungssteuergerät bekannt. Die US 2021/031585 A1 offenbart eine elektrische Aufhängevorrichtung. Aus der US 2018/156303 A1 ist eine Fahrzeugaufhängung bekannt. Die DE 10 2014 016857 A1 offenbart ein Verfahren und eine Vorrichtung zur Einstellung einer Dämpfkraft und Fahrzeuge. Aus der US 2019/232748 A1 sind Verfahren und Vorrichtungen zur Optimierung des Fahrverhaltens von Fahrzeugen bekannt.

Die Aufgabe der Erfindung besteht darin, eine aktive Fahrwerkregelung bereitzustellen, bei der im Vergleich zum Stand der Technik der Fahrkomfort in einfacher Weise erhöht werden kann.

Die Aufgabe ist durch die Merkmale des Anspruches 1 gelöst. Bevorzugte Weiterbildungen der Erfindung sind in den Unteransprüchen offenbart.

Die Erfindung geht von einer aktiven Fahrwerkregelung mit einem adaptiven Regelkreis aus, mit dem Aufbauschwingungen des Fahrzeugs reduzierbar sind. Im Regelkreis ist eine Regeleinheit (das heißt Aufbauregler) eingebunden. Diese steuert in Abhängigkeit von einer aktuellen Aufbauschwingung oder einem damit korrelierenden Parameter einen Fahrwerkaktuator an. In der Regeleinheit wird ein für eine Schwingungskompensation der Aufbauschwingung erforderliches Stellsignal generiert. Der Regeleinheit ist eine Adaptionseinheit signaltechnisch nachgeschaltet, die das in der Regeleinheit generierte Stellsignal mit einem fahrgeschwindigkeitsabhängigen Skalierungsfaktor adaptiert. Auf diese Weise ergibt sich ein adaptiertes Stellsignal, mit dem der Fahrwerkaktuator ansteuerbar ist. Der fahrgeschwindigkeitsabhängige Skalierungsfaktor wird in einer Signalerzeugungseinheit in Abhängigkeit von der aktuellen Fahrgeschwindigkeit bestimmt. Dabei gilt: Mit größer werdendem Skalierungsfaktor steigert sich die Dämpfungswirkung des Fahrwerkaktuators zur Reduzierung der Aufbauschwingung, jedoch bei gleichzeitiger Reduzierung des Abrollkomforts. In gleicher Weise reduziert sich mit kleiner werdendem Skalierungsfaktor die Dämpfungswirkung des Fahrwerkaktuators bei gleichzeitiger Erhöhung des Abrollkomforts. Gemäß dem kennzeichnenden Teil des Anspruches 1 ist der Signalerzeugungseinheit eine Auswerteeinheit zugeordnet. Mit Hilfe der Auswerteeinheit kann im Fahrbetrieb situationsbedingt, zum Beispiel beim Überfahren einer Bodenwelle, die eine signifikant größere Aufbauschwingung zur Folge hat, der Skalierungsfaktor temporär erhöht werden. Damit kann das adaptierte Stellsignal so bemessen werden, dass der Fahrwerkaktuator eine wirkungsvolle Schwingungsdämpfung der signifikant größeren Aufbauschwingung bewerkstelligen kann.

Eine solche temporäre Erhöhung des Skalierungsfaktors kann wie folgt durchgeführt werden: Die Auswerteeinheit bestimmt bei Vorliegen einer signifikant größeren Aufbauschwingung ein zusätzliches Faktor-Aufmaß. Das Faktor-Aufmaß kann auf den fahrgeschwindigkeitsabhängigen Skalierungsfaktor aufaddiert werden, und zwar unter Bildung eines Skalierungsfaktors, der in die Adaptionseinheit eingelesen werden kann, um die signifikant größere Aufbauschwingung wirkungsvoll zu dämpfen.

Auf diese Weise kann im normalen Fahrbetrieb, insbesondere im unteren Geschwindigkeitsbereich, ein im Vergleich zum Stand der Technik wesentlich reduzierter Skalierungsfaktor bereitgestellt werden. Im unteren Geschwindigkeitsbereich wird daher die (für den Fahrzeuginsassen unproblematische) Aufbauschwingung weniger stark gedämpft. Dies erfolgt jedoch zugunsten eines deutlich erhöhten Abrollkomforts.

Dagegen bestimmt die Auswerteeinheit bei Nicht-Vorliegen einer signifikant größeren Aufbauschwingung kein Faktor-Aufmaß. In diesem Fall entspricht daher der in die Adaptionseinheit eingelesene Skalierungsfaktor dem fahrgeschwindigkeitsabhängigen Skalierungsfaktor.

Der Kern der Erfindung besteht somit darin, dass der Faktor zur Skalierung der auf den Fahrwerkaktuator wirkenden Stellsignale erfindungsgemäß zusätzlich von einem Maß (das heißt von dem Faktor-Aufmaß) abhängig ist, das die Intensität der Aufbauschwingung wiedergibt.

Wird die Aufbauschwingung bei der Berechnung des Faktors einbezogen, kann der Skalierungsfaktor im normalen Fahrbetrieb (das heißt keine Bodenwelle-Überfahrt oder dergleichen) deutlich weiter abgesenkt werden. Denn sobald die Aufbauschwingung zu groß wird, kann diese durch temporäre Erhöhung des Skalierungsfaktors wieder wirkungsvoll gedämpft werden. Dadurch ist es möglich, den Abrollkomfort bei niedrigen Fahrgeschwindigkeiten deutlich zu erhöhen und gleichzeitig eine ausreichende Dämpfung bei ungünstigen oder größeren Anregungen bereitzustellen. Der Zielkonflikt zwischen der Aufbaudämpfung und dem Abrollkomfort kann dadurch entschärft werden.

In einem beliebig gestalteten Aufbauregler (nachfolgend allgemein als Regeleinheit bezeichnet) werden Stellsignale errechnet, welche der Beruhigung der Aufbauschwingungen dienen. Diese werden über einen noch zu bestimmenden Skalierungsfaktor skaliert bzw. adaptiert und den Fahrwerksaktuatoren zur Verfügung gestellt, welche die skalierten bzw. adaptierten Stellsignale gemäß ihrer physikalisch möglichen Systemgrenzen einstellen.

Im Gegensatz zum Stand der Technik wird die Kennlinie zur Skalierung der Stellsignale in zwei Dimensionen erweitert: Einerseits wird ein Maß zur Bestimmung der Intensität der Aufbauschwingung einbezogen; andererseits wird ein Halteglied bzw. Zeitglied vorgesehen. Ist die Aufbauschwingung gering (das heißt im normalen Fahrbetrieb), wird der Skalierungsfaktor im niedrigen Geschwindigkeitsbereich deutlich reduziert. Wird eine signifikant größere Aufbauschwingung detektiert, wird der Skalierungsfaktor angehoben und gehalten, bis die Aufbauschwingung wieder reduziert ist.

Die Herausforderung bei der Bestimmung der Intensität der Aufbauschwingung besteht darin, diese bereits in der ersten Halbwelle der Schwingungsperiode zu detektieren. Gängige Verfahren zielen darauf ab, das Schwingungsverhalten über gleitende Durchschnitte (zum Beispiel RMS) oder über langsam eingestellte Tiefpassfilter zu analysieren. Der dadurch entstehende Zeitverzug wäre für die erfindungsgemäße Funktion inakzeptabel, da Schwingungen erst detektiert werden können, wenn sich mehrere vollständige Schwingungsperioden ausgeprägt haben.

Um die Schwingungen so früh wie möglich zu detektieren, kann die folgende Vorgehensweise durchgeführt werden: Über einen oder mehrere Beschleunigungssensoren wird die vertikale Aufbaubeschleunigung im Fahrzeug gemessen. Aus dieser wird die vertikale Aufbaugeschwindigkeit errechnet, indem die Aufbaubeschleunigung integriert wird. Der bei der Integration entstehende Drift des Signals wird durch einen Hochpassfilter entfernt. Zusätzlich wird ein Tiefpassfilter eingesetzt, um das Rauschen zu reduzieren.

Die derartig gefilterte Aufbaugeschwindigkeit kann im Weiteren betragsmäßig betrachtet werden, da nur die Intensität der Aufbauschwingung und nicht die Schwingungsrichtung entscheidend ist.

Die im Betrag genommene und gefilterte Aufbaugeschwindigkeit wird dann mit zwei Schwellwerten verglichen. Unterschreitet die im Betrag genommene und gefilterte Aufbaugeschwindigkeit eine untere Grenze, wird als Skalierungsfaktor eine Minimalwertkennlinie ausgewählt. Überschreitet die im Betrag genommene und gefilterte Aufbaugeschwindigkeit eine obere Grenze, wird als Skalierungsfaktor eine Maximalwertkennlinie ausgewählt. Dazwischen wird der Faktor linear interpoliert.

Es ist zu beachten, dass die Minimal- und Maximalwertkennlinien zusätzlich von der Fahrgeschwindigkeit abhängig sind. Deswegen folgt der Faktor der Fahrgeschwindigkeit.

Die Aufbaugeschwindigkeit bzw. die Aufbaubeschleunigung folgt direkt der Wellenform der Schwingung. Daher würde der Skalierungsfaktor schon wieder reduziert werden, bevor die signifikant größere Aufbauschwingung abgeklungen ist. Deswegen wird die folgende Haltelogik vorgeschlagen: Steigt die Aufbaugeschwindigkeit an, folgt der Skalierungsfaktor ohne Zeitverzug (aber unter Berücksichtigung der oberen und unteren Grenze) der Aufbaugeschwindigkeit. Fällt die Aufbaugeschwindigkeit wieder ab, ohne einen neuen Höchstwert zu generieren, wird der Faktor noch für eine einzustellende Zeit auf seinem innerhalb der Schwingungsperiode erreichen Höchstwert gehalten. Dadurch wird sichergestellt, dass der Skalierungsfaktor für eine vollständige Schwingungsperiode erhöht bleibt und nicht vorzeitig wieder reduziert wird.

Nachfolgend werden Aspekte der Erfindung nochmals im Einzelnen hervorgehoben: Erfindungsgemäß wird die Größe der aktuellen Aufbauschwingung mittels eines damit korrelierenden Parameters dargestellt, und zwar der Aufbaubeschleunigung und/oder der Aufbaugeschwindigkeit. Diese können mit einem Aufbausensor erfasst werden, der der Auswerteeinheit zugeordnet ist.

Das Vorliegen bzw. Nicht-Vorliegen einer signifikant größeren Aufbauschwingung kann in der Auswerteeinheit wie folgt ermittelt werden: Erfindungsgemäß weist die Auswerteeinheit einen Vergleicherbaustein auf, in dem die Größe der aktuellen Aufbauschwingung oder des damit korrelierenden Parameters mit einem unteren Grenzwert verglichen wird. Sofern die aktuelle Aufbauschwingung kleiner ist als der untere Grenzwert, bestimmt der Vergleicherbaustein ein Nicht-Vorliegen einer signifikant größeren Aufbauschwingung. Im Gegensatz dazu bestimmt der Vergleicherbaustein erfindungsgemäß ein Vorliegen einer signifikant größeren Aufbauschwingung, sofern die aktuelle Aufbauschwingung größer ist als der untere Grenzwert. In diesen Fall wird von der Auswerteeinheit ein Faktor-Aufmaß ermittelt.

Im Hinblick auf ein günstiges Regelverhalten ist es von Bedeutung, dass der fahrgeschwindigkeitsabhängige Skalierungswert nicht schlagartig mit dem Faktor-Aufmaß erhöht wird. Dies würde zu einem ungünstigen Schwingungsverhalten führen. Vor diesem Hintergrund kann die folgende Signalverarbeitung erfolgen: So kann bei einer aktuellen Aufbauschwingung zwischen dem unteren Grenzwert und einem oberen Grenzwert die Auswerteeinheit das Faktor-Aufmaß in Abhängigkeit von der Größe der aktuellen Aufbauschwingung kontinuierlich anpassen. Mit Erreichen des oberen Grenzwertes kann das Faktor-Aufmaß einen fahrgeschwindigkeitsabhängigen Maximalwert einnehmen. Bei einer aktuellen Aufbauschwingung größer als der obere Grenzwert kann das Faktor-Aufmaß unverändert bei dem fahrgeschwindigkeitsabhängigen Maximalwert verharren.

Der fahrgeschwindigkeitsabhängige Maximalwert kann Bestandteil einer Maximalwert-Kennlinie sein, in der die Maximalwerte in Abhängigkeit von der Fahrgeschwindigkeit aufgetragen sind.

Um die signifikant größere Aufbauschwingung wirkungsvoll zu dämpfen, kann der Signalerzeugungseinheit ein Zeitglied zugeordnet sein. Bei Vorliegen einer signifikant größeren Aufbauschwingung kann mit Hilfe des Zeitglieds das Faktor-Aufmaß über eine vorgegebene Zeitdauer auf den fahrgeschwindigkeitsabhängigen Skalierungsfaktor aufaddiert werden.

Die vom Zeitglied vorgegebene Zeitdauer kann zumindest der Periodendauer der signifikant größeren Aufbauschwingung entsprechen. Diese ist im Wesentlichen identisch mit der Aufbaueigenschwingung des Fahrzeugaufbaus, der üblicherweise im Bereich von 1,3 Hz liegt.

Sämtliche Werte des fahrgeschwindigkeitsabhängigen Skalierungsfaktors sind Bestandteil einer Minimalwertkennlinie. Zwischen der Minimalwertkennlinie und der Maximalwertkennlinie ist ein Wertebereich aufgespannt, in dem sich die in der Signalerzeugungseinheit ermittelbaren Werte des in die Adaptionseinheit ausgelesenen Skalierungsfaktors befinden.

Nachfolgend ist ein Ausführungsbeispiel der Erfindung anhand der beigefügten Figuren beschrieben. Es zeigen:
- Fig. 1: ein Ersatzmodell eines Fahrwerks eines Kraftfahrzeugs mit zugeordneter Fahrwerkregelung;
- Fig. 2: Diagramme, die zeitliche Verläufe unterschiedlicher Parameter während einer Fahrwerkregelung zeigen;

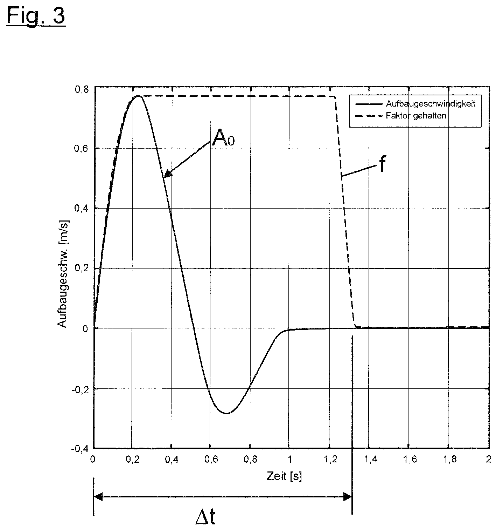

- Fig. 3: ein Diagramm, anhand dem die Dämpfung einer signifikant größeren Aufbauschwingung veranschaulicht ist; und
- Fig. 4: ein Diagramm mit eingetragener Maximalwertkennlinie sowie Minimalwertkennlinie.

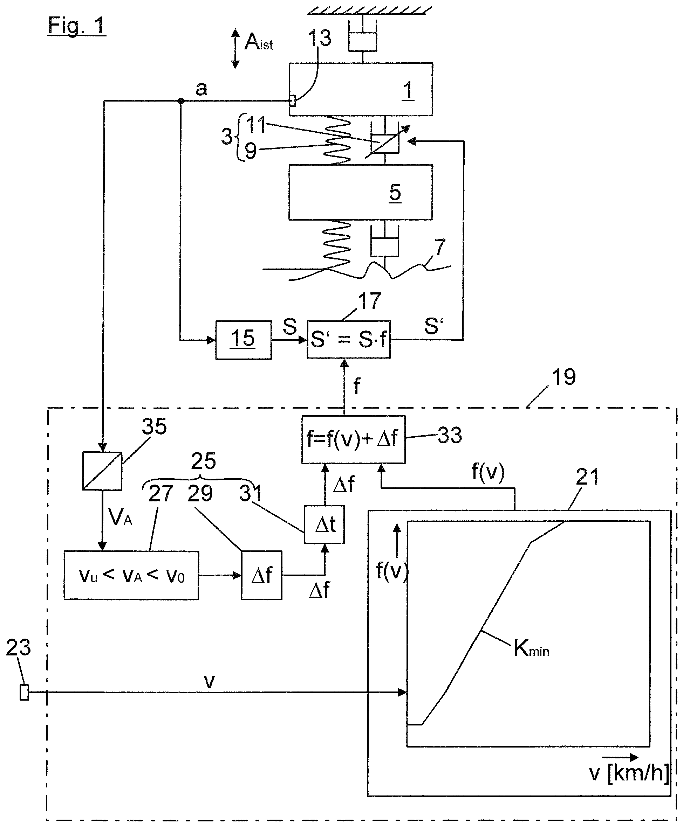

In dem Ersatzmodell der Fig. 1 ist ein Fahrzeugaufbau 1 über ein Federungs-/Dämpfungssystem 3 auf einem Fahrwerk abgestützt, dessen Fahrzeugrad 5 auf einer Fahrbahn 7 abrollt. Das Federungs-/Dämpfungssystem 3 besteht aus einer Tragfeder 9 und einem regelbaren Stoßdämpfer 11, die in der Fig. 1 zwischen dem Fahrzeugaufbau 1 und dem Fahrzeugrad 5 abgestützt sind. Der regelbare Stoßdämpfer 11 ist in einem adaptiven Regelkreis eingebunden, mit dem eine Aufbauschwingung Aᵢₛₜ des Fahrzeugaufbaus 1 während des Fahrbetriebs reduziert wird.

Hierzu weist der Regelkreis einen Aufbausensor 13 auf, der eine mit der aktuellen Aufbauschwingung Aᵢₛₜ korrelierende Aufbaubeschleunigung a erfasst. Der Aufbausensor 13 ist mit dem Signaleingang einer Regeleinheit 15 signaltechnisch in Verbindung. In der Regeleinheit 15 wird ein für eine Schwingungskompensation der Aufbauschwingung Aᵢₛₜ erforderliches Stellsignal S generiert. Der Regeleinheit 15 ist in Signalflussrichtung eine Adaptionseinheit 17 nachgeschaltet. In der Adaptionseinheit 17 wird das Stellsignal S mit einem Skalierungsfaktor f multipliziert, und zwar unter Erzeugung eines adaptierten Stellsignals S', mit dem der regelbare Stoßdämpfer 11 ansteuerbar ist, um die aktuelle Aufbauschwingung Aᵢₛₜ zu reduzieren.

Der Skalierungsfaktor f wird in einer Signalerzeugungseinheit 19 ermittelt. Diese weist in der Fig. 1 eine Datenbank 21 auf, in der eine Kennlinie Kₘᵢₙ hinterlegt ist, aus der ein fahrgeschwindigkeitsabhängiger Skalierungsfaktor f(v) in Abhängigkeit von der aktuellen Fahrgeschwindigkeit v ermittelbar ist. Die aktuelle Fahrgeschwindigkeit v wird über einen Drehzahlsensor 23 erfasst, der signaltechnisch mit der Datenbank 21 in Verbindung ist. Zudem weist die Signalerzeugungseinheit 19 eine Auswerteeinheit 25 auf. Diese besteht aus einem Vergleicherbaustein 27, einem Ermittlungsbaustein 29 und einem Zeitglied 31. Mit Hilfe der Auswerteeinheit 25 wird während des Fahrbetriebs situationsbedingt (zum Beispiel bei der Überfahrt einer Bodenwelle) ein Faktor-Aufmaß Δf ermittelt. Das Faktor-Aufmaß Δf wird in einem Summierglied 33 dem fahrgeschwindigkeitsabhängigen Skalierungsfaktor f(v) aufaddiert, woraus sich der Skalierungsfaktor f ergibt, der in die Adaptionseinheit 17 eingelesen wird.

In der Fig. 1 liegt am Signaleingang des Vergleicherbausteins 27 ein mit der Größe der erfassten Aufbauschwingung Aᵢₛₜ korrelierender Parameter, nämlich die Aufbaugeschwindigkeit v_{A}, an, die der Aufbauschwingung Aᵢₛₜ folgt und daher in etwa mit der Aufbaueigenfrequenz schwingt, die zum Beispiel bei 1,3 Hz liegt. Die Aufbaugeschwindigkeit v_{A} wird in einem Wandlerbaustein 35 auf der Grundlage der von dem Aufbausensor 13 erfassten Aufbaubeschleunigung a erzeugt.

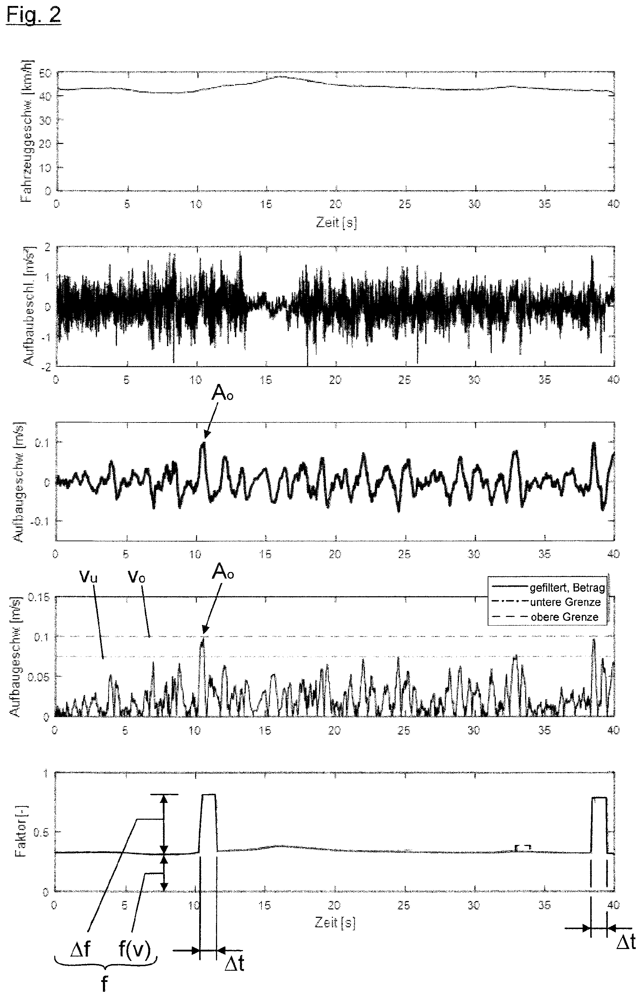

Im Vergleicherbaustein 27 wird die Aufbaugeschwindigkeit v_{A} mit einem unteren Grenzwert vᵤ und einem oberen Grenzwert vₒ verglichen. Sofern die Aufbaugeschwindigkeit v_{A} kleiner ist als der untere Grenzwert vᵤ ist, bestimmt der Vergleicherbaustein 27 ein Nicht-Vorliegen einer signifikant größeren Aufbauschwingung A₀ (Figur 2). In diesem Fall wird im Ermittlungsbaustein 29 kein Faktor-Aufmaß Δf ermittelt. Das heißt, dass der in die Adaptionseinheit 13 ausgelesene Skalierungsfaktor f identisch ist mit dem fahrgeschwindigkeitsabhängigen Skalierungsfaktor f(v).

Sofern die Aufbaugeschwindigkeit v größer als der untere Grenzwert vᵤ ist, bestimmt der Vergleicherbaustein 27 das Vorliegen einer signifikant größeren Aufbauschwingung A₀. In diesem Fall wird im Ermittlungsbaustein 29 ein Faktor-Aufmaß Δf ermittelt, das auf den fahrgeschwindigkeitsabhängigen Skalierungsfaktor f(v) aufaddiert wird.

Solange sich die Aufbaugeschwindigkeit v_{A} zwischen dem unteren Grenzwert vᵤ und dem oberen Grenzwert vₒ befindet, wird in dem Ermittlungsbaustein 29 das Faktor-Aufmaß Δf in Abhängigkeit von der Größe der Aufbaugeschwindigkeit v kontinuierlich angepasst. Mit Erreichen des oberen Grenzwertes vₒ nimmt das Faktor-Aufmaß Δf einen fahrgeschwindigkeitsabhängigen Maximalwert ein. Bei einer Aufbaugeschwindigkeit v_{A} größer als der obere Grenzwert vₒ bleibt das Faktor-Aufmaß Δf unverändert bei dem fahrgeschwindigkeitsabhängigen Maximalwert.

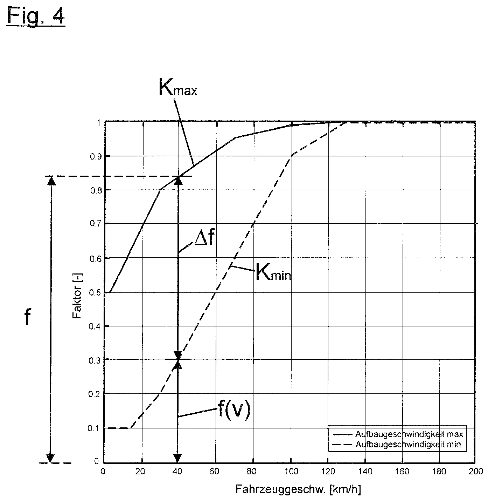

Der fahrgeschwindigkeitsabhängige Maximalwert ist Bestandteil einer Maximalwertkennlinie Kₘₐₓ, die im Diagramm der Figur 4 eingetragen ist. Demnach sind aus der Maximalwertkennlinie Kₘₐₓ die Maximalwerte in Abhängigkeit von der Fahrgeschwindigkeit v bestimmbar. In gleicher Weise bilden sämtliche Werte des fahrgeschwindigkeitsabhängigen Skalierungsfaktors f(v) eine Minimalwertkennlinie Kₘᵢₙ. Beide Kennlinien sind in dem Diagramm der Figur 4 eingezeichnet. Demnach ist zwischen der Minimalwertkennlinie Kₘᵢₙ und der Maximalwertkennlinie Kₘₐₓ ein Wertebereich aufgespannt, in dem sich die in der Signalerzeugungseinheit 19 ermittelbaren Werte des Skalierungsfaktors f befinden.

Beispielhaft wird nachfolgend anhand der Figur 2 die Fahrwerkregelung bei einer Fahrgeschwindigkeit im niedrigen Geschwindigkeitsbereich von etwa 40 km/h (Figur 2, erstes Diagramm von oben) erläutert. In diesem Fall erfasst der Aufbausensor 13 einen zeitlichen Verlauf der Aufbaubeschleunigung a, der im zweiten Diagramm von oben in der Figur 2 gezeigt ist. Daraus wird im Wandlerbaustein 35 der zeitliche Verlauf der Aufbaugeschwindigkeit v_{A} berechnet (siehe drittes Diagramm von oben in der Figur 2). Der zeitliche Verlauf wird gemäß viertem Diagramm von oben betragsmäßig dargestellt. Der zeitliche Verlauf der im Betrag vorliegenden Aufbaugeschwindigkeit v_{A} wird im Vergleicherbaustein 27 mit den beiden Grenzwerten vᵤ und vₒ verglichen.

Wie aus dem zeitlichen Verlauf der im Betrag vorliegenden Aufbaugeschwindigkeit v_{A} (viertes Diagramm von oben in der Figur 4) hervorgeht, erfolgt der Fahrbetrieb bis zu einem Zeitpunkt t₀ auf ebenem Straßenbelag ohne Bodenwelle, so dass sich keine übermäßig große Aufbauschwingung Aᵢₛₜ einstellt. Der Vergleicherbaustein 27 ermittelt daher ein Nicht-Vorliegen einer übermäßig großen Aufbauschwingung A₀. Entsprechend erzeugt die Auswerteeinheit 25 bis zum Zeitpunkt t₀ kein Faktor-Aufmaß Δf. Der in die Adaptionseinheit 17 eingelesene Skalierungsfaktor f ist daher identisch mit dem fahrgeschwindigkeitsabhängigen Skalierungsfaktor f(v). Dieser liegt bei der Fahrgeschwindigkeit von 40 km/h bei einem sehr niedrigen Wert von ca. 0,3 (vgl. auch Fig. 4). Ein derart geringer Skalierungsfaktor f reduziert zwar die Dämpfungswirkung des Fahrwerkaktuators 11. Die Reduzierung der Dämpfungswirkung erfolgt allerdings zugunsten eines gesteigerten Abrollkomforts, der im niedrigen Geschwindigkeitsbereich von großer Bedeutung für den Insassenkomfort ist, und zwar im Gegensatz zu einer Dämpfung von Aufbauschwingungen, die im unteren Geschwindigkeitsbereich unproblematisch für den Fahrzeuginsassen sind.

Zum Zeitpunkt t₀ erfolgt zum Beispiel eine Bodenwellen-Überfahrt bei ansonsten ebenem Fahrbahnbelag. Dies führt zu einer signifikant größeren Aufbauschwingung A₀, welche vom Vergleicherbaustein 27 erfasst wird. Bei Vorliegen der Aufbauschwingung A₀ wird im Berechnungsbaustein 29 ein Faktor-Aufmaß Δf berechnet. Im vorliegenden Beispiel liegt der Faktor-Aufmaß Δf bei etwa 0,5 (vgl. auch Fig. 4). Im Summierglied 33 ergibt sich daher ein Skalierungsfaktor f von etwa 0,8, der in die Adaptionseinheit 17 eingelesen wird. Mit einem derart hochgesetzten Skalierungsfaktor f die Adaptionseinheit 17 ein entsprechend adaptiertes Stellsignal S' erzeugen, mit dem der Fahrwerkaktuator 11 die Aufbauschwingung A₀ wirkungsvoll dämpfen kann.

Bei Vorliegen der signifikant größeren Aufbauschwingung A₀ wird mit Hilfe des Zeitglieds 31 das Faktor-Aufmaß Δf über eine vorgegebene Zeitdauer Δt auf den fahrgeschwindigkeitsabhängigen Skalierungsfaktor f(v) aufaddiert. Wie aus der Fig. 4 hervorgeht, ist die vom Zeitglied 31 vorgegebene Zeitdauer Δt größer als die Periodendauer der signifikant größeren Aufbauschwingung A₀, die im Wesentlichen der Aufbaueigenschwingung des Fahrzeugaufbaus 1 entspricht.

### BEZUGSZEICHENLISTE:

- 1: Fahrzeugaufbau
- 3: Federungs-/Schwingungsdämpfungssystem
- 5: Fahrzeugrad
- 7: Fahrzeugbahn
- 9: Tragfeder
- 11: regelbarer Stoßdämpfer
- 13: Aufbausensor
- 15: Regeleinheit
- 17: Adaptionseinheit
- 19: Signalerzeugungseinheit
- 21: Datenbank
- 23: Drehzahlsensor
- 25: Auswerteeinheit
- 27: Vergleicherbaustein
- 29: Ermittlungsbaustein
- 31: Zeitglied
- 33: Summierglied
- 35: Wandlerbaustein
- Aᵢₛₜ: aktuelle Aufbauschwingung
- A₀: signifikant größere Aufbauschwingung
- a: Aufbaubeschleunigung
- v_{A}: Aufbaugeschwindigkeit
- f(v): fahrgeschwindigkeitsabhängiger Skalierungsfaktor
- Δf: Faktor-Aufmaß
- f: Skalierungsfaktor
- vᵤ: unterer Grenzwert
- vₒ: oberer Grenzwert
- Kₘᵢₙ: Minimalwertkennlinie
- Kₘₐₓ: Maximalwertkennlinie
- S: Stellsignal
- S': adaptiertes Stellsignal
- t₀: Zeitpunkt, zu dem sich eine signifikant größere Aufbauschwingung einstellt
- Δt: Zeitdauer

## Patentansprüche

1. Aktive Fahrwerkregelung für ein Kraftfahrzeug mit einem adaptiven Regelkreis zur Reduzierung von Aufbauschwingungen (Aᵢₛₜ) des Kraftfahrzeugs, in dem eine Regeleinheit (15) eingebunden ist, die in Abhängigkeit von einer aktuellen Aufbauschwingung (Aᵢₛₜ) oder einem damit korrelierenden Parameter einen Fahrwerkaktuator (11) ansteuert, wobei der Regeleinheit (15) eine Adaptionseinheit (17) nachgeschaltet ist, die ein von der Regeleinheit (15) generiertes Stellsignal (S) mit einem fahrgeschwindigkeitsabhängigen Skalierungsfaktor (f(v)) adaptiert, und zwar unter Bildung eines adaptierten Stellsignals (S'), mit dem der Fahrwerkaktuator (11) ansteuerbar ist, wobei der fahrgeschwindigkeitsabhängige Skalierungsfaktor (f(v)) in einer Signalerzeugungseinheit (19) in Abhängigkeit von der aktuellen Fahrgeschwindigkeit (v) bestimmbar ist, und wobei insbesondere mit größer werdendem Skalierungsfaktor (f(v)) sich die Aufbauschwingungsdämpfungswirkung des Fahrwerkaktuators (11) steigert bei gleichzeitiger Reduzierung des Abrollkomforts, und wobei insbesondere mit kleiner werdendem Skalierungsfaktor (f(v)) sich die Aufbauschwingungsdämpfungswirkung des Fahrwerkaktuators (11) reduziert bei gleichzeitiger Steigerung des Abrollkomforts, **dadurch gekennzeichnet,**
**dass** der Signalerzeugungseinheit (19) eine Auswerteeinheit (25) zugeordnet ist, die bei Vorliegen einer signifikant größeren Aufbauschwingung (Aₒ) ein Faktor-Aufmaß (Δf) bestimmt, das auf den fahrgeschwindigkeitsabhängigen Skalierungsfaktor (f(v)) aufaddierbar ist, und zwar unter Bildung eines Skalierungsfaktors (f), mit dem in der Adaptionseinheit (17) das adaptierte Stellsignal (S') erzeugbar ist, um die größere Aufbauschwingung (Aₒ) wirkungsvoll zu dämpfen,
**dass** die Größe der aktuellen Aufbauschwingung (Aᵢₛₜ) mittels korrelierender Parameter, und zwar der Aufbaubeschleunigung (a) und/oder der Aufbaugeschwindigkeit (V_{A}), darstellbar ist,
**dass** die Auswerteeinheit (25) einen Vergleicherbaustein (27) aufweist, in dem die Größe der aktuellen Aufbauschwingung (Aᵢₛₜ) oder des damit korrelierenden Parameters (v_{A}) mit einem unteren Grenzwert (vᵤ) vergleichbar ist, und
**dass** der Vergleicherbaustein (27) das Vorliegen einer signifikant größeren Aufbauschwingung (Aₒ) bestimmt, sofern die aktuelle Aufbauschwingung (Aᵢₛₜ) größer als der untere Grenzwert (vᵤ) ist, sodass die Auswerteeinheit (25) ein Faktor-Aufmaß (Δf) ermittelt.

2. Aktive Fahrwerkregelung nach Anspruch 1, **dadurch gekennzeichnet, dass** die Auswerteeinheit (25) bei Nicht-Vorliegen einer größeren Aufbauschwingung (Aₒ) kein Faktor-Aufmaß (Δf) bestimmt, sodass der Skalierungsfaktor (f) in der Adaptionseinheit (17) dem fahrgeschwindigkeitsabhängigen Skalierungsfaktor (f(v)) entspricht.

3. Aktive Fahrwerkregelung nach Anspruch 1 oder 2, **dadurch gekennzeichnet, dass** der Auswerteinheit (25) ein Aufbausensor (13) zugeordnet ist, mit dem die Größe der aktuellen Aufbauschwingung (Aᵢₛₜ), insbesondere deren Aufbaugeschwindigkeit (v_{A}) und/oder deren Aufbaubeschleunigung (a), erfassbar ist.

4. Aktive Fahrwerkregelung nach einem der Ansprüche 1, 2 oder 3, **dadurch gekennzeichnet, dass** der Vergleicherbaustein (27) ein Nicht-Vorliegen einer größeren Aufbauschwingung (Aₒ) bestimmt, sofern die aktuelle Aufbauschwingung (Aᵢₛₜ) kleiner ist als der untere Grenzwert (vᵤ), sodass die Auswerteeinheit (25) kein Faktor-Aufmaß (Δf) ermittelt.

5. Aktive Fahrwerkregelung nach einem der vorhergehenden Ansprüche, **dadurch gekennzeichnet, dass** bei einer aktuellen Aufbauschwingung (Aᵢₛₜ) zwischen dem unteren Grenzwert (vᵤ) und einem oberen Grenzwert (vₒ) die Auswerteeinheit (25) das Faktor-Aufmaß (Δf) in Abhängigkeit von der Größe der aktuellen Aufbauschwingung (Aᵢₛₜ) kontinuierlich anpasst, und/oder dass insbesondere mit Erreichen des oberen Grenzwertes (vₒ) das Faktor-Aufmaß (Δf) einen fahrgeschwindigkeitsabhängigen Maximalwert einnimmt.

6. Aktive Fahrwerkregelung nach Anspruch 5, **dadurch gekennzeichnet, dass** bei einer aktuellen Aufbauschwingung (Aᵢₛₜ) größer als der obere Grenzwert (vₒ) das Faktor-Aufmaß (Δf) unverändert bei dem fahrgeschwindigkeitsabhängigen Maximalwert bleibt, und dass insbesondere der fahrgeschwindigkeitsabhängige Maximalwert Bestandteil einer Maximalwertkennlinie (Kₘₐₓ) ist, in der die Maximalwerte in Abhängigkeit von der Fahrgeschwindigkeit (v) aufgetragen sind.

7. Aktive Fahrwerkregelung nach einem der vorhergehenden Ansprüchen, **dadurch gekennzeichnet, dass** der Signalerzeugungseinheit (19) ein Zeitglied (31) zugeordnet ist, und dass bei Vorliegen einer größeren Aufbauschwingung (Aₒ) das Faktor-Aufmaß (Δf) mit Hilfe des Zeitglieds (31) über eine vorgegebene Zeitdauer (Δt) auf den fahrgeschwindigkeitsabhängigen Skalierungsfaktor (f(v)) aufaddierbar ist.

8. Aktive Fahrwerkregelung nach Anspruch 7, **dadurch gekennzeichnet, dass** die vorgegebene Zeitdauer (Δt) zumindest der Periodendauer der größeren Aufbauschwingung (Aₒ) entspricht, die insbesondere im Wesentlichen die Aufbaueigenschwingung des Fahrzeugaufbaus (1) ist, die beispielhaft in einem Bereich von 1, 3 Hz liegt.

9. Aktive Fahrwerkregelung nach Anspruch 6, 7 oder 8, **dadurch gekennzeichnet, dass** die sämtliche Werte des fahrgeschwindigkeitsabhängigen Skalierungsfaktors (f(v)) eine Minimalwertkennlinie (Kₘᵢₙ) bilden, und dass insbesondere zwischen der Minimalwertkennlinie (Kₘᵢₙ) und der Maximalwertkennlinie (Kₘₐₓ) ein Wertebereich aufgespannt ist, in dem sich die in der Signalerzeugungseinheit (19) ermittelbaren Werte des Skalierungsfaktors (F) befinden.

## Claims

1. Active chassis control for a motor vehicle with an adaptive control circuit for reducing body vibrations (Aᵢₛₜ) of the motor vehicle, in which a control unit (15) is integrated which actuates a chassis actuator (11) depending on a current body vibration (Aᵢₛₜ) or a parameter correlated therewith, wherein the control unit (15) is followed by an adaptive unit (17) which adapts an actuating signal (S) generated by the control unit (15) with a driving speed-dependent scaling factor (f(v)), specifically by forming an adapted actuating signal (S') with which the chassis actuator (11) can be actuated, wherein the driving speed-dependent scaling factor (f(v)) can be determined in a signal generation unit (19) as a function of the current driving speed (v), and wherein, in particular as the scaling factor (f(v)) increases, the body vibration damping effect of the chassis actuator (11) increases with a simultaneous reduction in ride comfort, and wherein, as the scaling factor (f(v)) decreases, the body vibration damping effect of the chassis actuator (11) is reduced with a simultaneous increase in ride comfort,
**characterized in that**
an evaluation unit (25) is assigned to the signal generation unit (19), which evaluation unit, given a significantly greater body vibration (Aₒ), determines a factor allowance (Δf) that can be added to the driving speed-dependent scaling factor (f(v)), specifically by forming a scaling factor (f) with which, in the adaptive unit (17), the adapted actuating signal (S') can be generated in order to effectively dampen the greater body vibration (Aₒ),
the magnitude of the current body vibration (Aᵢₛₜ) is representable by means of correlating parameters, specifically body acceleration (a) and/or body speed (V_{A}),
the evaluation unit (25) has a comparator module (27) in which the magnitude of the current body vibration (Aᵢₛₜ) or of the parameter correlated therewith (V_{A}) is comparable with a lower limit value (vᵤ), and
the comparator module (27) determines the presence of a significantly greater body vibration (Aₒ) if the current body vibration (Aᵢₛₜ) is greater than the lower limit value (vᵤ), so that the evaluation unit (25) determines a factor allowance (Δf).

2. Active chassis control according to claim 1, **characterized in that** the evaluation unit (25) does not determine a factor allowance (Δf) if there is no greater body vibration (Aₒ), so that the scaling factor (f) in the adaptive unit (17) corresponds to the driving speed-dependent scaling factor (f(v)).

3. Active chassis control according to claim 1 or 2, **characterized in that** a body sensor (13) is assigned to the evaluation unit (25), with which body sensor the magnitude of the current body vibration (Aᵢₛₜ), in particular its body speed (v_{A}) and/or its body acceleration (a), can be detected.

4. Active chassis control according to any one of claims 1, 2 or 3, **characterized in that** the comparator module (27) determines an absence of a greater body vibration (Aₒ) if the current body vibration (Aᵢₛₜ) is smaller than the lower limit value (vᵤ), so that the evaluation unit (25) does not determine a factor allowance (Δf).

5. Active chassis control according to any one of the preceding claims, **characterized in that,** with a current body vibration (Aᵢₛₜ) between the lower limit value (vᵤ) and an upper limit value (vₒ), the evaluation unit (25) continuously adapts the factor allowance (Δf) as a function of the magnitude of the current body vibration (Aᵢₛₜ), and/or **in that**, in particular when the upper limit value (vₒ) is reached, the factor allowance (Δf) assumes a driving speed-dependent maximum value.

6. Active chassis control according to claim 5, **characterized in that,** when the current body vibration (Aᵢₛₜ) is greater than the upper limit value (vₒ), the factor allowance (Δf) remains unchanged at the driving speed-dependent maximum value, and **in that**, in particular, the driving speed-dependent maximum value is part of a maximum value characteristic curve (Kₘₐₓ) in which the maximum values are plotted as a function of the driving speed (v).

7. Active chassis control according to any one of the preceding claims, **characterized in that** a timer (31) is assigned to the signal generation unit (19), and **in that**, given a greater body vibration (Aₒ), the factor allowance (Δf) can be added to the driving speed-dependent scaling factor (f(v)) over a predetermined period of time (Δt) using the timer (31).

8. Active chassis control according to claim 7, **characterized in that** the predetermined period of time (Δt) corresponds at least to the period of the greater body vibration (Aₒ) which in particular essentially represents the natural body vibration of the vehicle body (1), which, for example, lies in a range of 1.3 Hz.

9. Active chassis control according to claim 6, 7, or 8, **characterized in that** all values of the driving speed-dependent scaling factor (f(v)) form a minimum value characteristic curve (Kₘᵢₙ), and **in that**, in particular, between the minimum value characteristic curve (Kₘᵢₙ) and the maximum value characteristic curve (Kₘₐₓ), a value range is spanned in which the values of the scaling factor (F) determined in the signal generation unit (19) are located.

## Revendications

1. Système de régulation active du châssis pour un véhicule automobile avec un circuit de régulation adaptatif destiné à réduire les vibrations de carrosserie (Aᵢₛₜ) du véhicule automobile, dans lequel une unité de régulation (15) est intégrée, qui commande un actionneur de châssis (11) en fonction d'une vibration de carrosserie actuelle (Aᵢₛₜ) ou d'un paramètre lui étant corrélé, dans lequel une unité d'adaptation (17) est montée en aval de l'unité de régulation (15), qui adapte un signal de commande (S) généré par l'unité de régulation (15) avec un facteur d'échelle (f(v)) dépendant de la vitesse de conduite, à savoir en formant un signal de commande adapté (S') avec lequel l'actionneur de châssis (11) peut être commandé, dans lequel le facteur d'échelle (f(v)) dépendant de la vitesse de conduite peut être déterminé dans une unité de génération de signal (19) en fonction de la vitesse de conduite actuelle (v), et dans lequel l'effet d'amortissement de vibrations de carrosserie de l'actionneur de châssis (11) augmente en particulier avec un facteur d'échelle (f(v)) plus grand utilisé tout en réduisant le confort de roulement, et dans lequel en particulier avec un facteur d'échelle (f(v)) plus petit utilisé, l'effet d'amortissement de vibrations de carrosserie de l'actionneur de châssis (11) diminue tout en augmentant le confort de roulement,
**caractérisé en ce que**
l'unité de génération de signal (19) est associée à une unité d'évaluation (25) qui, en présence d'une oscillation de carrosserie (Aₒ) significativement plus grande, détermine une tolérance de facteur (Δf) qui peut être ajoutée au facteur d'échelle (f(v)) dépendant de la vitesse de conduite, à savoir en formant un facteur d'échelle (f) avec lequel le signal de commande adapté (S') peut être généré dans l'unité d'adaptation (17) pour amortir efficacement l'oscillation de carrosserie (Aₒ) plus grande,
la grandeur de l'oscillation de carrosserie actuelle (Aᵢₛₜ) peut être représentée au moyen de paramètres de corrélation, à savoir l'accélération de carrosserie (a) et/ou la vitesse de carrosserie (V_{A}),
l'unité d'évaluation (25) présente un module comparateur (27) dans lequel la grandeur de l'oscillation de carrosserie actuelle (Aᵢₛₜ) ou du paramètre de corrélation (V_{A}) est comparable à une valeur limite inférieure (vᵤ), et
le module comparateur (27) détermine la présence d'une oscillation de carrosserie (Aₒ) significativement plus grande, dans la mesure où l'oscillation de carrosserie actuelle (Aᵢₛₜ) est plus grande que la valeur limite inférieure (vᵤ), de sorte que l'unité d'évaluation (25) détermine une tolérance de facteur (Δf).

2. Système de régulation active du châssis selon la revendication 1, **caractérisé en ce que** l'unité d'évaluation (25) ne détermine pas de tolérance de mesure (Δf) en l'absence d'une oscillation de carrosserie (Aₒ) plus grande, de sorte que le facteur d'échelle (f) dans l'unité d'adaptation (17) correspond au facteur d'échelle (f(v)) dépendant de la vitesse de conduite.

3. Système de régulation active du châssis selon la revendication 1 ou 2, **caractérisé en ce qu'**un capteur de carrosserie (13) est associé à l'unité d'évaluation (25), avec lequel la grandeur de l'oscillation de carrosserie actuelle (Aᵢₛₜ), en particulier sa vitesse de carrosserie (v_{A}) et/ou son accélération de carrosserie (a), peut être détectée.

4. Système de régulation active du châssis selon l'une quelconque des revendications 1, 2 ou 3, **caractérisé en ce que** le module comparateur (27) détermine une absence d'une oscillation de carrosserie (Aₒ) plus grande, dans la mesure où l'oscillation de carrosserie actuelle (Aᵢₛₜ) est plus petite que la valeur limite inférieure (vᵤ), de sorte que l'unité d'évaluation (25) ne détermine pas de tolérance de facteur (Δf).

5. Système de régulation active du châssis selon l'une quelconque des revendications précédentes, **caractérisé en ce que,** dans le cas d'une oscillation de carrosserie actuelle (Aᵢₛₜ) entre la valeur limite inférieure (vᵤ) et une valeur limite supérieure (vₒ), l'unité d'évaluation (25) adapte continuellement la tolérance de facteur (Δf) en fonction de la grandeur de l'oscillation de carrosserie actuelle (Aᵢₛₜ), et/ou **en ce que**, en particulier lorsque la valeur limite supérieure (vₒ) est atteinte, la tolérance de facteur (Δf) prend une valeur maximale dépendant de la vitesse de déplacement.

6. Système de régulation active du châssis selon la revendication 5, **caractérisé en ce que,** dans le cas d'une oscillation de carrosserie actuelle (Aᵢₛₜ) plus grande que la valeur limite supérieure (vₒ), la tolérance de facteur (Δf) reste inchangée à la valeur maximale dépendant de la vitesse de conduite, et en particulier que la valeur maximale dépendant de la vitesse de conduite fait partie d'une courbe caractéristique de valeur maximale (Kₘₐₓ) dans laquelle les valeurs maximales sont représentées en fonction de la vitesse de conduite (v).

7. Système de régulation active du châssis selon l'une quelconque des revendications précédentes, **caractérisé en ce qu'**un organe de temps (31) est associé à l'unité de génération de signal (19), et **en ce qu'**en présence d'une oscillation de carrosserie (Aₒ) plus grande, la tolérance de facteur (Δf) peut être ajoutée à l'aide de l'organe de temps (31) pendant une durée prédéfinie (Δt) au facteur d'échelle (f(v)) dépendant de la vitesse de conduite.

8. Système de régulation active du châssis selon la revendication 7, **caractérisé en ce que** la durée prédéfinie (Δt) correspond au moins à la durée de période de l'oscillation de carrosserie (Aₒ) plus grande, qui est en particulier sensiblement l'oscillation de carrosserie propre de la carrosserie de véhicule (1), qui se situe par exemple dans une plage de 1, 3 Hz.

9. Système de régulation active du châssis selon la revendication 6, 7 ou 8, **caractérisé en ce que** toutes les valeurs du facteur d'échelle (f(v)) dépendant de la vitesse de conduite forment une courbe caractéristique de valeur minimale (Kₘᵢₙ), et **en ce qu'**une plage de valeurs s'étend en particulier entre la courbe caractéristique de valeur minimale (Kₘᵢₙ) et la courbe caractéristique de valeur maximale (Kₘₐₓ), dans laquelle se trouvent les valeurs du facteur d'échelle (F) pouvant être déterminées dans l'unité de génération de signal (19).
